# FASCICULE DE BREVET EUROPEEN

(11) **EP 1 486 418 B1**
(45) Date de publication et mention de la délivrance du brevet: **14.10.2009**
(21) Numéro de dépôt: 04103980.1
(22) Date de dépôt: 19.05.2000
(51) Int. Cl.: B64D 27/26

(54) **Dispositif d'accrochage d'un moteur d'aeronef à un mat**
Triebwerksgondelaufhängung für Luftfahrzeuge
Aircraft engine mounting arrangement on an engine pylon

(30) Priorité: 19.05.1999 FR 9906336
(43) Date de publication de la demande: 15.12.2004
(62) Demande divisionnaire de: 00401327.2
(73) Titulaire: AIRBUS France, 31060 Toulouse (FR)
(72) Inventeur: Jule, Pascal, 31170 Tournefeuille (FR); Porte, Alain, 31770 Colomiers (FR); Levert, Stéphane, 31200 Toulouse (FR)
(74) Mandataire: Poulin, Gérard

(56) Documents cités:
- EP-A- 0 805 108
- EP-A- 0 844 172

## Description

### Domaine technique

L'invention concerne un dispositif d'accrochage destiné au montage d'un moteur d'aéronef sur un mât fixé à un élément de structure de l'aéronef, tel qu'un élément de voilure ou de fuselage.

Le dispositif d'accrochage conforme à l'invention peut être utilisé sur tout type d'avion. Une application privilégiée concerne les avions de construction récente, dont les moteurs sont équipés de soufflantes de très grands diamètres.

### Etat de la technique

Les moteurs qui équipent les aéronefs sont soit suspendus à un mât fixé sous la voilure de l'aéronef, soit accrochés latéralement à un mât fixé sur le fuselage de l'aéronef. Dans l'un et l'autre cas, la liaison entre le moteur et le mât est généralement assurée par un dispositif d'accrochage avant et un dispositif d'accrochage arrière. Ces dispositifs d'accrochage ont pour fonction de transmettre à l'aéronef, par l'intermédiaire du mât, les efforts engendrés par le moteur.

Pour analyser les efforts transmis par les dispositifs d'accrochage, on affecte au moteur un repère orthonormé OXYZ, dans lequel l'axe OX, dirigé vers l'avant, est orienté selon l'axe longitudinal du moteur, l'axe OY est orienté latéralement dans un plan horizontal et l'axe OZ est orienté verticalement vers le haut.

Par rapport à ce repère, dans le cas d'un moteur suspendu à la voilure, les efforts transmis à la structure de l'aéronef par les dispositifs d'accrochage sont principalement des efforts de poussée du moteur, appliqués sensiblement selon l'axe OX, des efforts latéraux dus notamment à une rafale de vent, appliqués sensiblement selon l'axe OY, et des efforts dus à la masse du moteur ou générés en cas de crash de l'avion, appliqués sensiblement selon l'axe OZ. De plus, les dispositifs d'accrochage transmettent à la structure de l'aéronef un moment selon l'axe OX, dû au mouvement rotatif du moteur. Dans le cas d'un moteur monté latéralement sur le fuselage, les efforts appliqués selon les axes OY et OZ sont inversés.

Pour assurer la fixation d'un turboréacteur sur un mât d'accrochage d'aéronef, il existe actuellement deux types principaux de montage : le montage de type "core" et le montage de type "fan hybride".

Dans le montage de type "core", le carter central du turboréacteur est directement fixé au mât d'accrochage par une attache avant et une attache arrière. Dans ce cas, l'attache avant reprend simultanément les efforts selon les axes OX, OY et OZ et l'attache arrière reprend les efforts selon les axes OY et OZ ainsi que le moment selon l'axe OX.

Dans le montage de type "fan hybride", une attache avant est interposée entre le mât et le carter de soufflante du turboréacteur et une attache arrière est interposée entre le mât et le carter central du turboréacteur, comme dans le montage de type "core". Dans ce cas, l'attache avant reprend les efforts selon les axes OY et OZ et l'attache arrière reprend les efforts selon les axes OX, OY et OZ ainsi que le moment selon l'axe OX. De plus et comme l'illustrent notamment les document EP-A- 0 564 126 et EP-A-0844172 (qui montre toutes les caractéristiques du préambule de la revendication 1), la reprise de la poussée selon l'axe OX s'effectue au moyen de deux bielles reliant l'attache arrière à la partie avant du carter central du moteur.

Ainsi, dans l'ensemble des systèmes de montage des moteurs d'aéronefs utilisés habituellement, Il n'existe pas de dispositif d'accrochage apte à transmettre au mât à la fois les efforts de poussée du moteur exercés selon l'axe OX et les efforts latéraux exercés selon l'axe OY.

Comme l'illustre notamment le document US-A-5 275 357, les dispositifs d'accrochage utilisés dans les systèmes de montage existants comportent le plus souvent une structure d'accrochage de secours. Cette structure d'accrochage de secours, liée directement au mât ou à une ferrure intermédiaire, est sollicitée uniquement dans le cas d'une rupture d'un ou plusieurs des éléments de la structure d'accrochage principale. Actuellement, toutes les pièces des structures d'accrochage de secours sont passives en fonctionnement normal. Elles n'interviennent pas lorsque la structure d'accrochage principale est opérationnelle. Elles ne deviennent actives que lors de la rupture d'une ou de plusieurs pièces de la structure d'accrochage principale. Leur absence n'altérerait donc pas la transmission des efforts au travers de la structure d'accrochage principale du dispositif d'accrochage.

L'utilisation récente de moteurs de dimensions et de masse de plus en plus importantes accentue des problèmes tels que la mise en flexion du moteur, les vibrations, etc.. Afin de s'affranchir de ces problèmes en assurant une meilleure répartition des masses, on envisage de remplacer les systèmes de montage traditionnels par un nouveau système, utilisant trois dispositifs d'accrochage au lieu de deux. Dans ce cas, le mât serait relié à l'avant du carter central du moteur par un dispositif d'accrochage avant ne reprenant que les efforts appliqués dans deux directions orthogonales, correspondant sensiblement à l'axe longitudinal OX et à l'axe latéral OY.

Pour réaliser ce dispositif d'accrochage, il n'est pas possible d'utiliser l'attache avant servant à reprendre les efforts selon les axes OY et OZ dans le montage de type "fan hybride". En effet, le plan des efforts à transmettre est horizontal et non plus vertical.

Par ailleurs, le dispositif d'accrochage appelé à remplir cette fonction doit, de préférence, être facilement démontable, afin d'éviter toute perte de temps lors de la dépose ou de la pose du moteur.

Enfin, il n'est pas non plus possible de reprendre l'un des autres dispositifs d'accrochage utilisés dans les systèmes de montage traditionnels, tels que l'attache avant du montage de type "core", qui reprend les efforts exercés selon les axes OX, OY et OZ. En effet, du fait que ces dispositifs d'accrochage existants reprennent aussi des efforts exercés selon la direction OZ, leur utilisation impose de rigidifier plus fortement le mât afin d'assurer une reprise correcte des efforts transmis par le dispositif d'accrochage. Cela implique de rajouter de la matière et donc d'alourdir le mât, ce qui est pénalisant. De plus, cela irait à l'encontre d'une amélioration des performances du moteur, recherchée par l'utilisation d'un nouveau système de montage incluant un dispositif d'accrochage avant ne reprenant que les efforts appliqués principalement selon l'axe longitudinal OX et selon l'axe OY.

### Exposé de l'invention

L'invention a principalement pour objet un dispositif d'accrochage simplifié, susceptible d'être utilisé dans un nouveau système de montage d'un moteur d'aéronef sur un mât, afin d'assurer seulement la transmission des efforts de poussée et des efforts latéraux, dans un emplacement réduit et en perturbant le moins possible l'écoulement aérodynamique de l'air.

Secondairement, l'invention a aussi pour objet un dispositif d'accrochage apte à être facilement démonté, si nécessaire.

Conformément à l'invention, ce résultat est obtenu au moyen d'un dispositif d'accrochage d'un moteur d'aéronef sur un mât fixé à un élément de structure de l'aéronef, ledit dispositif étant conforme à la revendication 1.

Compte tenu de la fonction essentielle qu'il remplit dans le dispositif d'accrochage selon l'invention, l'élément commun à la structure d'accrochage principale et à la structure d'accrochage de secours comprend avantageusement au moins deux pièces distinctes, aptes à transmettre indépendamment l'une de l'autre les efforts orientés selon la première et la deuxième directions. Ainsi, en cas de rupture de l'une des deux pièces, la transmission des efforts continue à être assurée au travers de l'autre pièce.

Avantageusement, l'extrémité du doigt est alors normalement séparée du fond de l'évidement d'une distance telle que ladite extrémité est apte à venir en appui contre ledit fond, pour transmettre au mât des efforts exercés parallèlement au troisième axe, lors d'un atterrissage sans roues de l'aéronef.

Selon un premier mode de réalisation de l'invention, la structure d'accrochage principale comprend, de plus, un palonnier articulé sensiblement en son centre sur ledit élément, deux premières bielles articulées à chacune des extrémités du palonnier, de façon à relier celui-ci à un carter du moteur, principalement selon la première direction, et une troisième bielle, articulée directement entre ledit élément et le carter du moteur, sensiblement selon la deuxième direction.

Dans cet agencement, le palonnier est de préférence articulé sur l'élément commun à la structure d'accrochage principale et à la structure d'accrochage de secours par un axe d'articulation principalement parallèle au troisième axe, situé dans le plan médian.

Selon un deuxième mode de réalisation de l'invention, la structure d'accrochage principale comprend, de plus, deux bielles articulées directement entre ledit élément et le carter du moteur et orientées de façon sensiblement symétrique par rapport au plan médian, selon deux directions intermédiaires entre la première direction et la deuxième direction.

Dans tous les modes de réalisation, les bielles sont avantageusement articulées par des axes rotulés. Cet agencement permet d'éviter que des efforts parasites, c'est-à-dire orientés selon une direction différente de la première et de la deuxième directions de transmission d'efforts précitées, ne transitent par le dispositif d'accrochage.

Dans le cas où le moteur est un turboréacteur, le dispositif d'accrochage selon l'invention est utilisé avantageusement pour relier le mât au carter central de ce turboréacteur.

De préférence, l'élément commun à la structure d'accrochage principal et à la structure d'accrochage de secours comprend un plan de déconnexion, prévu pour être fixé au mât par des moyens de fixation.

### Brève description des dessins

On décrira à présent, à titre d'exemples non limitatifs, deux modes de réalisation préférés de l'invention, en se référant aux dessins annexés, dans lesquels :
- la figure 1 est une vue en perspective, illustrant un premier mode de réalisation d'un dispositif d'accrochage selon l'invention ;
- la figure 2 est une coupe du dispositif de la figure 1, selon un plan médian commun à ce dispositif et au mât ; et
- la figure 3 est une vue en perspective, illustrant un deuxième mode de réalisation de l'invention.

### Exposé détaillé de deux modes de réalisation préférés de l'invention

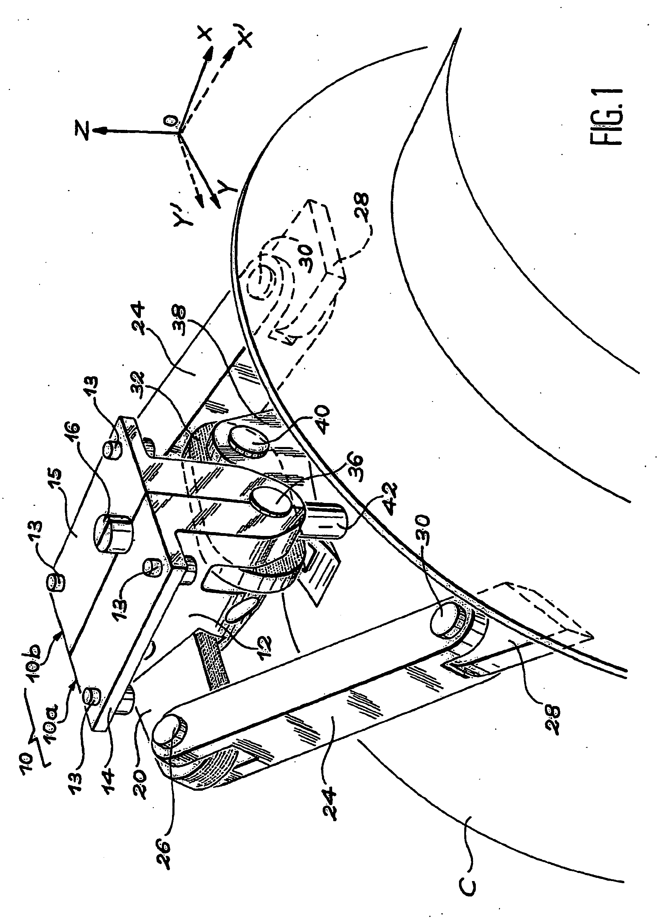

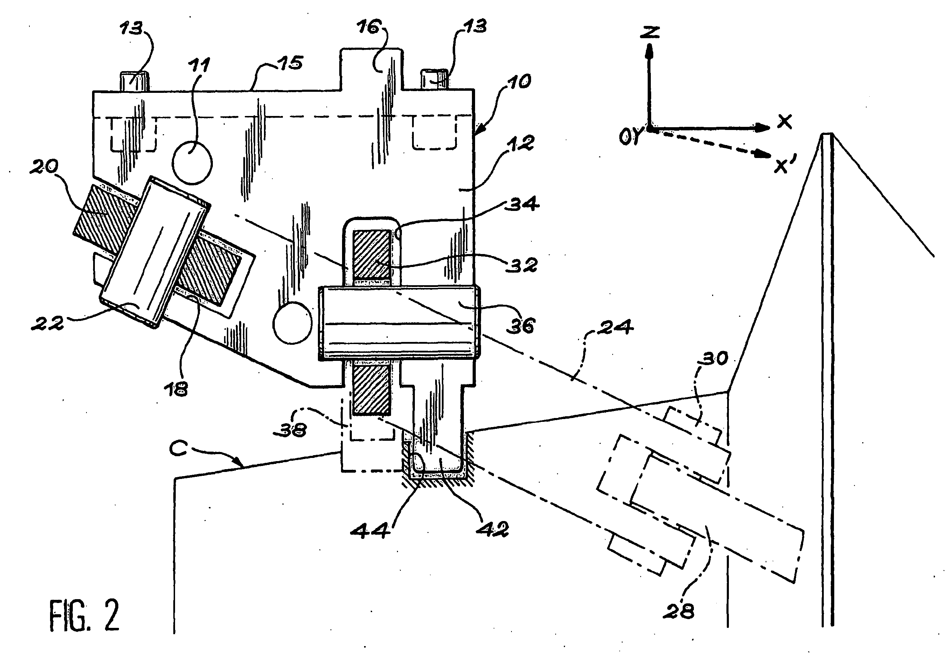

Sur les figure 1 et 2, on a représenté un premier mode de réalisation d'un dispositif d'accrochage conforme à l'invention, appliqué au cas d'un moteur monté sous la voilure d'un aéronef. Dans une variante de réalisation non représentée, un dispositif d'accrochage identique, mais orienté différemment, peut être utilisé pour monter un moteur latéralement contre le fuselage d'un aéronef.

Le dispositif d'accrochage représenté sur les figures 1 et 2 permet de relier un carter C du moteur dont on désire réaliser l'accrochage à un mât (non représenté) fixé sous la voilure de l'aéronef. Plus précisément, dans le cas le plus fréquent où le moteur de l'aéronef est un turboréacteur, le dispositif d'accrochage selon l'invention est avantageusement interposé entre le mât et le carter central C de ce turboréacteur.

Conformément à une caractéristique essentielle de l'invention, le dispositif d'accrochage illustré sur les figures 1 et 2 est un dispositif particulièrement simple et compact, dimensionné et optimisé de façon à ne transmettre au mât que les efforts exercés par le moteur selon deux directions orthogonales.

Plus précisément, le dispositif d'accrochage est conçu pour transmettre au mât des efforts exercés selon une première direction, principalement parallèle à l'axe longitudinal du moteur, et selon une deuxième direction, principalement parallèle à un axe transversal du moteur, perpendiculaire à l'axe longitudinal et à un plan médian commun au moteur et au mât.

Ainsi, dans un repère orthonormé OXYZ dans lequel l'axe OX est orienté vers l'avant selon l'axe longitudinal du moteur, l'axe OY est orienté latéralement, c'est-à-dire perpendiculairement à un plan médian du moteur et du mât, et l'axe OZ est orienté verticalement vers le haut, le dispositif d'accrochage conforme à l'invention assure la transmission au mât des efforts exercés selon une première direction X', orientée principalement selon l'axe OX et selon une deuxième direction Y', orientée principalement selon l'axe OY. En d'autres termes, les composantes principales des directions X' et Y' sont orientées, respectivement, selon les axes OX et OY.

Dans le cas (non représenté) où le dispositif d'accrochage est appliqué au montage d'un moteur sur le fuselage d'un aéronef, les efforts transmis par ce dispositif sont orientés principalement selon les axes OX et OZ.

Comme les dispositifs d'accrochage utilisés dans les systèmes de montage traditionnels de type "core" et de type "fan hybride", le dispositif d'accrochage selon l'invention comprend une structure d'accrochage principale, qui assure normalement la transmission intégrale des efforts lorsqu'elle est opérationnelle, et une structure d'accrochage de secours, au travers de laquelle transite une partie des efforts à transmettre, après la cassure de l'une des pièces de la structure d'accrochage principale.

Dans le dispositif d'accrochage selon l'invention, la structure d'accrochage principale et la structure d'accrochage de secours comprennent un élément commun, désigné de façon générale par la référence 10 sur les figures.

Compte tenu de sa fonction vitale dans le dispositif d'accrochage, l'élément 10 est formé de deux pièces distinctes 10a et 10b, au travers desquelles transitent tous les efforts transmis entre le moteur et le mât, dans les conditions normales comme dans les conditions de secours. Plus précisément, chacune des pièces 10a et 10b formant l'élément 10 est apte à transférer, à elle seule, l'ensemble de ces efforts.

Chacune des pièces 10a et 10b présente en section, dans le plan vertical YOZ, la forme d'un L. Les deux pièces 10a et 10b sont accolées dos à dos de telle sorte que l'élément 10 ainsi formé présente en section dans le plan YOZ la forme d'un T. Les pièces 10a et 10b sont assemblées l'une à l'autre, par exemple au moyen de boulons 11 (figure 2) ou d'écrous à barillet pour bloquer l'axe du palonnier 20.

Ainsi, l'élément 10 comprend une ferrure d'ancrage verticale 12, formée pour moitié dans chacune des pièces 10a et 10b, ainsi qu'une semelle horizontale 14, également formée pour moitié dans chacune des deux pièces constituant l'élément 10.

La face supérieure plane 15 de la semelle 14 de l'élément 10 forme un plan de déconnexion prévu pour être fixé sous le mât d'accrochage suspendu à la voilure, par tout moyen de fixation approprié tel que des vis 13, des écrous à barillet, ou autres.

Pour assurer la transmission au mât des efforts qui transitent par l'élément 10 du dispositif d'accrochage, un doigt cylindrique 16 fait saillie sur la face supérieure plane 15 de l'élément 10. Lorsque celui-ci est fixé sous le mât, le doigt 16 pénètre sans jeu dans un trou cylindrique (non représenté) prévu à cet effet dans le mât. La reprise des efforts selon les directions X' et Y' est ainsi assurée. Comme le montre la figure 1, le doigt 16 est réalisé pour moitié dans chacune des deux pièces 10a, 10b dont l'interface passe par l'axe vertical du doigt.

La ferrure d'ancrage 12 fait saillie vers le bas à partir de la semelle 14, dans le plan vertical médian OXZ commun au moteur et au mât.

Dans sa partie arrière (à gauche sur la figure 2) par rapport au sens d'écoulement de l'air, la ferrure d'ancrage 12 est traversée dans la direction latérale OY par une fente 18. Plus précisément, cette fente 18 est située dans un plan incliné vers le bas en allant vers l'avant du moteur. L'intersection de ce plan avec le plan médian OXZ correspond à la première direction X' des efforts à reprendre.

Un palonnier 20 traverse la fente 18, pour être articulé sur la ferrure d'ancrage 12, sensiblement en son centre, par un axe de pivotement 22. Cet axe 22 est perpendiculaire au plan incliné OX'Y. Le palonnier 20 est orienté transversalement, selon une direction moyenne sensiblement parallèle à l'axe OY. Il fait partie intégrante de la structure d'accrochage principale, au même titre que l'axe de pivotement 22 et que l'élément 10.

Comme l'illustre notamment la figure 1, la structure d'accrochage principale comprend de plus deux bielles 24, reliant chacune des extrémités du palonnier 20 au carter C du moteur.

Plus précisément, une première extrémité de chacune des bielles 24 forme une chape femelle, articulée sur l'extrémité correspondante du palonnier 20 par un axe de pivotement 26. Cet axe de pivotement 26 est lui-même monté sur l'extrémité du palonnier 20 par l'intermédiaire d'une rotule (non représentée).

L'autre extrémité de chacune des bielles 24 forme également une chape femelle, articulée sur une chape mâle 28 prévue à cet effet sur le carter C du moteur, par l'intermédiaire d'un axe de pivotement 30. Cet axe de pivotement 30 est lui-même monté dans la chape mâle 28 par l'intermédiaire d'une rotule (non représentée).

La disposition relative du palonnier 20 et des chapes 28 liées au carter C est telle que les bielles 24 sont orientées vers l'arrière, en partant des chapes 28, selon des directions principalement parallèles à l'axe longitudinal OX du moteur. Plus précisément, les bielles 24 sont situées dans le plan incliné X'OY et se rapprochent l'une de l'autre, en allant vers l'arrière.

Les éléments de la structure d'accrochage principale décrits jusqu'à présent assurent la reprise des efforts selon la première direction X'.

Afin d'assurer la reprise des efforts selon la deuxième direction Y', la structure d'accrochage principale comprend aussi une troisième bielle 32, reliant la ferrure d'ancrage 12 au carter C du moteur selon l'axe latéral OY. Plus précisément, la troisième bielle 32 est située dans un pan parallèle au plan YOZ.

Une première extrémité de la bielle 32 est reçue dans une fente 34 usinée, selon ce plan YOZ, dans la partie avant de la ferrure d'ancrage 12. Cette première extrémité de la bielle 32 est articulée dans la ferrure 12 par un axe d'articulation 36, orienté selon l'axe longitudinal OX du moteur. L'axe 36 est monté dans la troisième bielle 32 par l'intermédiaire d'une rotule (non représentée). Il est à noter que le plan de joint des pièces 10a et 10b formant l'élément 10 passe par l'axe géométrique de l'axe d'articulation 36.

La deuxième extrémité de la bielle 32 est articulée dans une chape femelle 38, solidaire du carter C du moteur, par un axe d'articulation 40. Cet axe d'articulation 40 est monté dans la bielle 32 par l'intermédiaire d'une rotule (non représentée).

Cet agencement permet à la bielle 32 de transmettre au mât, par l'intermédiaire de l'élément 10, les efforts latéraux, selon la direction Y', exercés par le moteur.

Il est à noter qu'en dehors de l'élément 10, toutes les pièces formant la structure d'accrochage principale sont des pièces monoblocs. Cela donne à cette structure une grande simplicité.

La structure d'accrochage de secours est essentiellement constituée par l'élément 10. Afin d'assurer cette fonction, l'élément 10 comprend un doigt cylindrique 42, qui fait saillie radialement vers le carter C du moteur, parallèlement à l'axe OZ. Ce doigt 42 est réalisé pour moitié dans chacune des pièces 10a et 10b, dont l'interface passe par l'axe vertical du doigt.

Comme l'illustre en particulier la figure 2, le doigt 42 pénètre avec jeu dans un évidement cylindrique 44 formé sur le carter C du moteur. Plus précisément, il existe entre les parois circonférentielles du doigt 42 et de l'évidement 44 un jeu tel que ces parois ne viennent jamais en contact l'une avec l'autre lorsque la structure d'accrochage principale est opérationnelle.

Ainsi, lorsque toutes les pièces du dispositif d'accrochage qui vient d'être décrit sont en état de marche et lorsque l'avion est au sol, l'ensemble formé par le palonnier 20 et par les bielles 24 s'équilibre naturellement, du fait que le palonnier pivote librement autour de l'axe 22. Les efforts de poussée exercés par le moteur selon l'axe OX transitent par les bielles 24, le palonnier 20, l'axe 22, puis l'élément 10, jusqu'au mât (non représenté). Les efforts latéraux, dus au vent, exercés par le moteur selon l'axe OY transitent par la bielle 32, puis l'élément 10, jusqu'au mât (non représenté). L'élément 10, qui constitue la structure d'accrochage de secours, est donc actif en permanence, c'est-à-dire même en l'absence de rupture d'une pièce de la structure d'accrochage principale.

Lorsque l'avion est en vol, le dispositif est soumis à des efforts de poussée selon l'axe OX, à des efforts latéraux selon l'axe OY et à des efforts dus au poids du moteur, selon l'axe OZ.

Les efforts de poussée sont repris majoritairement par l'ensemble bielles 24-palonnier 20-élément 10, comme expliqué précédemment.

Les efforts latéraux, dus par exemple à une rafale de vent, sont repris majoritairement par l'ensemble bielle 32-élément 10, comme expliqué précédemment.

Enfin, les efforts dus au poids du moteur sont repris majoritairement par un ou plusieurs autres dispositifs d'accrochage (non représentés) par lesquels le moteur est également relié au mât. Comme on l'a décrit précédemment, les bielles 24 sont articulées sur le palonnier 20 et sur le carter C par des axes rotulés et la bielle 32 est articulée sur l'élément 10 et sur le carter C par des axes rotulés. Par conséquent, si une faible partie des efforts dus au poids, exercés selon l'axe OZ, n'est pas reprise par un autre dispositif d'accrochage du système de montage, elle ne peut en aucune façon être transmise par le système d'accrochage décrit.

De préférence, l'extrémité du doigt 42 est normalement séparée du fond de l'évidement 44 d'une distance prédéterminée, telle qu'aucun contact n'est possible lorsque toutes les pièces du dispositif sont en état de marche. En revanche, cette distance est choisie afin que le fond de l'évidement vienne en appui contre l'extrémité du doigt lors d'un atterrissage sans roues de l'aéronef. Une partie des efforts alors exercés par le moteur selon la direction verticale OZ est ainsi transmise au mât au travers du dispositif d'accrochage.

Par ailleurs, en cas de rupture de l'une des pièces constitutives de la structure d'accrochage principale, l'élément 10 devient actif en tant que structure d'accrochage de secours.

Ainsi, si l'une des bielles 24, l'une des extrémités du palonnier 20, ou l'un des axes 26 et 30 casse, l'élément 10 assure automatiquement le passage des efforts exercés selon la direction X', en association avec la partie encore intègre de l'ensemble palonnier 20-bielles 24-axes 26, 30. Cette fonction est obtenue par la venue en appui du doigt 42 contre le bord arrière de l'évidement 44.

Par ailleurs, en cas de rupture de la bielle 32 ou de l'un des axes 36 et 40, l'élément 10 assure automatiquement, en intégralité, le passage des efforts latéraux exercés selon la direction Y'. Cette fonction est obtenue par la venue en appui du doigt 42 contre le bord latéral correspondant de l'évidement 44.

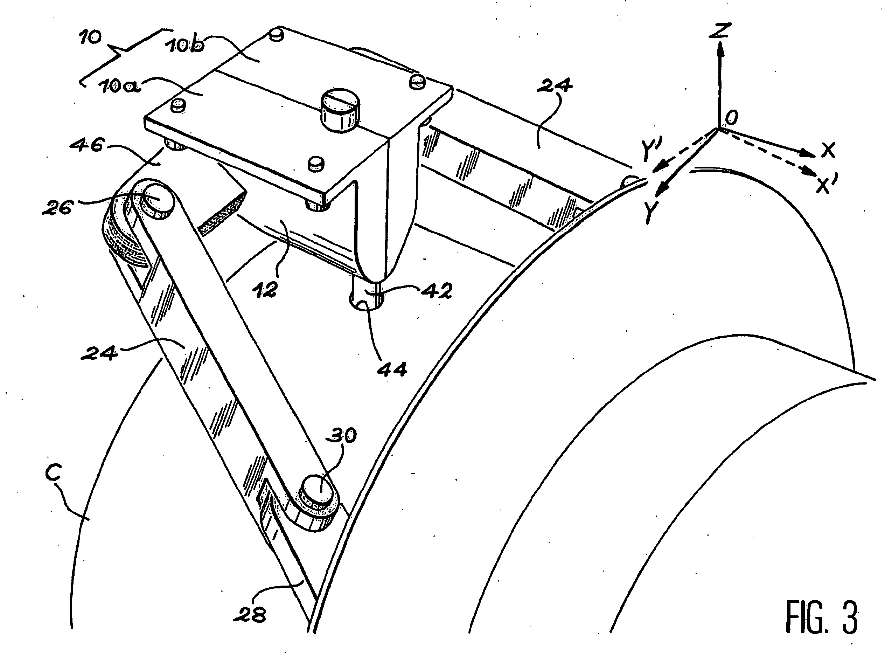

Le deuxième mode de réalisation de l'invention, illustré sur la figure 3, diffère tout d'abord du premier par le fait que le palonnier est supprimé et que les bielles 24 sont articulées directement sur l'élément 10 par les axes 26.

La suppression du palonnier permet aux bielles 24 de transmettre également au mât les efforts latéraux exercés par le moteur, au travers de l'élément 10. Par conséquent, le deuxième mode de réalisation illustré sur la figure 3 diffère également du premier par le fait que la troisième bielle 32 est supprimée.

L'élément 10, dont la forme générale reste inchangée, comprend dans ce cas deux oreilles 46 (dont une seule est visible sur la figure 3). Chaque oreille 46 est réalisée d'un seul tenant avec l'une des pièces 10a, 10b formant l'élément 10, et s'étend selon la direction latérale Y, de part et d'autre de la ferrure d'ancrage 12, dans un plan X'OY identique à celui du palonnier 20 dans le premier mode de réalisation.

Au lieu d'être articulées sur les extrémités du palonnier 20, les chapes femelles formées aux extrémités des bielles 24 sont articulées sur les oreilles 46 par des axes 26. Les axes 26 sont montés dans les oreilles 46 par l'intermédiaire de rotules (non représentées). La liaison entre les extrémités opposées des bielles 24 et le carter C, par l'intermédiaire des axes 30 et des chapes 28, reste inchangée. Les bielles 24 sont ainsi orientées de façon sensiblement symétrique par rapport au plan médian XOZ, selon deux directions intermédiaires entre les directions X' et Y'.

Enfin, la structure d'accrochage de secours, matérialisée par l'élément 10, est la même que dans le premier mode de réalisation. En particulier, la reprise des efforts est assurée par la venue en appui de la paroi circonférentielle de l'évidement 44 formé dans le carter C avec le doigt 42 solidaire de l'élément 10, en cas de rupture de l'une quelconque des pièces constitutives de la structure d'accrochage principale.

Bien entendu, l'invention n'est pas limitée au mode de réalisation qui vient d'être décrit à titre d'exemple. Ainsi, au moins certaines des chapes mâles et femelles reliant les différentes pièces du dispositif, au travers des axes de pivotement, peuvent être inversées sans sortir du cadre de l'invention. Par ailleurs, si le dispositif est avantageusement placé entre un mât et un carter central de turboréacteur, il peut aussi être utilisé pour relier un mât à tout autre carter de moteur d'avion. Enfin, comme on l'a déjà observé, un tel dispositif peut aussi être utilisé dans le cas d'un moteur fixé latéralement au fuselage d'un aéronef.

## Revendications

1. Dispositif d'accrochage d'un moteur d'aéronef sur un mât fixé à un élément de structure de l'aéronef, ledit dispositif comprenant une structure d'accrochage principale et une structure d'accrochage de secours, dont la structure d'accrochage principale (10,24) assure la transmission d'efforts exercés selon une première direction (X'), principalement parallèle à un axe longitudinal (OX) du moteur, et selon une deuxième direction (Y'), principalement parallèle à un axe transversal (OY) du moteur, perpendiculaire à l'axe longitudinal (OX) et à un plan médian (XOZ) commun au moteur et au mât, la structure d'accrochage de secours comprenant un élément (10) apte à être fixé au mât, qui fait aussi partie de la structure d'accrochage principale, **caractérisé en ce que** la structure d'accrochage principale (10, 24) assure seulement la transmission d'efforts exercés selon la première direction (X') et selon la deuxième direction (Y') et **en ce que** ledit élément (10) apte à être fixé au mât et le carter (C) du moteur formant deux organes adjacents, lédit élément comprend un doigt (42), qui est apte à faire saillie avec jeu dans un évidement (44) lié à un carter (C) du moteur, parallèlement à un troisième axe (OZ), perpendiculaire à l'axe longitudinal (OX) et à l'axe transversal (OY) du moteur, de façon à n'être jamais en contact avec les parois de l'évidement (44) lorsque la structure d'accrochage principale est opérationnelle.

2. Dispositif selon la revendication 1, dans lequel une extrémité du doigt (42) est normalement séparée du fond de l'évidement (44) d'une distance telle que ladite extrémité est apte à venir en appui contre ledit fond, pour transmettre au mât des efforts exercés parallèlement au troisième axe (OZ), lors d'un atterrissage sans roues de l'aéronef.

3. Dispositif selon l'une quelconque des revendications 1 et 2, dans lequel la structure d'accrochage principale comprend, de plus, un palonnier (20) articulé sensiblement en son centre sur ledit élément (10), deux premières bielles (24) articulées à chacune des extrémités du palonnier (20), de façon à relier celui-ci à un carter (C) du moteur, principalement selon la première direction (X'), et une troisième bielle (32), articulée directement entre ledit élément (10) et le carter (C) du moteur, sensiblement selon la deuxième direction (Y').

4. Dispositif selon la revendication 3, dans lequel le palonnier (20) est articulé sur l'élément (10) par un axe d'articulation (22) principalement parallèle au troisième axe (OZ), situé dans le plan médian (XOZ).

5. Dispositif selon l'une quelconque des revendications 1 et 2, dans lequel la structure d'accrochage principale comprend, de plus, deux bielles (24) articulées directement entre ledit élément (10) et le carter (C) du moteur et orientées de façon sensiblement symétrique par rapport au plan médian (XOY), selon deux directions intermédiaires entre la première direction (X') et la deuxième direction (Y').

6. Dispositif selon l'une quelconque des revendications 3 à 5, dans lequel les bielles (24,32) sont articulées par des axes rotulés (26,30,36,40).

7. Dispositif selon l'une quelconque des revendications 1 à 6, dans lequel, le moteur étant un turboréacteur, ledit carter est un carter central (C) de celui-ci.

8. Dispositif selon l'une quelconque des revendications précédentes, dans lequel ledit élément (10) comprend un plan de déconnexion, prévu pour être fixé au mât par des moyens de fixation (13).

## Claims

1. A device for mounting an aircraft engine on a pylon attached to a structural element of the aircraft, said device comprising a main mounting device and a emergency mounting device, the main mounting structure of which (10, 24) ensures transmission of forces exerted along a first direction (X'), mainly parallel to a longitudinal axis (OX) of the engine, and along a second direction (Y'), mainly parallel to a transverse axis (OY) of the engine, perpendicular to the longitudinal axis (OX) and to a median plane (XOZ) common to the engine and to the pylon, the emergency mounting structure comprising an element (10) capable of being attached to the pylon, which is also part of the main mounting structure, **characterized in that** the main mounting structure (10, 24) only ensures transmission of forces exerted along the first direction (X') and along the second direction (Y') and **in that** said element (10) capable of being attached to the pylon and the case (C) of the engine forming two adjacent members, said element comprises a finger (42) which is capable of protruding with clearance in a recess (44) bound to a case (C) of the engine, parallel to a third axis (OZ), perpendicular to the longitudinal axis (OX) and to the transverse axis (OY) of the engine, so as to be never in contact with the walls of the recess (44) when the main mounting structure is operational.

2. The device according to claim 1, wherein an end of the finger (42) is normally separated from the bottom of the recess (44) by a distance such that said end is capable of bearing against said bottom, in order to transmit to the pylon, forces exerted parallel to the third axis (OZ) during a landing without any wheels of the aircraft.

3. The device according to any of claims 1 and 2, wherein the main mounting structure further comprises a rudder control bar (20) substantially jointed in its centre on said element (10), two first connecting rods (24) jointed to each of the ends of the rudder control bar (20), so as to connect the latter to a case (C) of the engine, mainly along the first direction (X'), and a third connecting rod (32) directly jointed between said element (10) and the case (C) of the engine, substantially along the second direction (Y').

4. The device according to claim 3, wherein the rudder control bar (20) is jointed on the element (10) by a joint axis (22) mainly parallel to the third axis (OZ), located in the median plane (XOZ).

5. The device according to any of claims 1 and 2, wherein the main mounting structure further comprises two connecting rods (24) directly jointed between said element (10) and the case (C) of the engine and oriented in a substantially symmetrical way relatively to the median plane (XOY), along two intermediate directions between the first direction (X') and the second direction (Y').

6. The device according to any of claims 3 to 5, wherein the connecting rods (24, 32) are jointed by ball joint axes (26, 30, 36, 40).

7. The device according to any of claims 1 to 6, wherein, the engine being a jet turbine engine, said case is a central case (C) of the latter.

8. The device according to any of the preceding claims, wherein said element (10) comprises a disconnection plane, provided in order to be attached to the pylon by attachment means (13).

## Patentansprüche

1. Vorrichtung zur Aufhängung eines Luftfahrzeugtriebwerks an einem Masten, der an einem Strukturelement des Luftfahrzeugs befestigt ist, wobei die Vorrichtung eine Hauptaufhängungsstruktur und eine Hilfsaufhängungsstruktur umfasst, wobei die Hauptaufhängungsstruktur (10, 24) die Übertragung von Kräften, die in einer ersten Richtung (X'), die im wesentlichen parallel zu einer Längsachse (OX) des Triebwerks ist, und in einer zweiten Richtung (Y'), die im wesentlichen parallel zu einer Querachse (OY) des Triebwerks, senkrecht zur Längsachse (OX) und einer dem Triebwerk und dem Masten gemeinsamen Mittelebene (XOZ) ist, auftreten, gewährleistet, wobei die Hilfsaufhängungsstruktur ein an dem Masten befestigbares Element (10) umfasst, das auch Teil der Hauptaufhängungsstruktur ist,
**dadurch gekennzeichnet, dass** die Hauptaufhängungsstruktur (10, 24) nur die Übertragung von Kräften, die in der ersten Richtung (X') und in der zweiten Richtung (Y') auftreten, gewährleistet und das an dem Masten befestigbare Element (10) und das Gehäuse (C) des Triebwerks zwei benachbarte Organe bilden, wobei das Element einen Finger (42) umfasst, der parallel zu einer dritten Achse (OZ), senkrecht zur Längsachse (OX) und zur Querachse (OY) des Triebwerks mit Spiel in eine mit einem Gehäuse (C) des Triebwerks verbundene Vertiefung (44) derart eindringen kann, dass er nie mit den Wänden der Vertiefung (44) in Kontakt ist, wenn die Hauptaufhängungsstruktur in Betrieb ist.

2. Vorrichtung nach Anspruch 1, wobei ein Ende des Fingers (42) normalerweise vom Boden der Vertiefung (44) mit einem derartigen Abstand getrennt ist, dass bei einer Landung des Luftfahrzeugs ohne Räder das Ende sich auf den Boden stützen kann, um parallel zur dritten Achse (OZ) auftretende Kräfte auf den Masten zu übertragen.

3. Vorrichtung nach einem der Ansprüche 1 oder 2, wobei die Hauptaufhängungsstruktur ferner ein im wesentlichen in dessen Mitte bewegliches Pedal (20) an dem Element (10), zwei erste Pleuelstangen (24), die jeweils mit den Enden des Pedals (20) derart gelenkig verbunden sind, dass dieses mit einem Triebwerksgehäuse (C) verbunden ist, hauptsächlich in der ersten Richtung (X') und eine dritte Pleuelstange (32,) die direkt zwischen dem Element (10) und dem Triebwerksgehäuse (C) beweglich ist, im wesentlichen in der zweiten Richtung (Y'), umfasst.

4. Vorrichtung nach Anspruch 3, wobei das Pedal (20) mit dem Element (10) über eine Gelenkachse (22), die im wesentlichen parallel zur in der Mittelebene (XOZ) gelegenen dritten Achse (OZ) ist, gelenkig verbunden ist.

5. Vorrichtung nach einem der Ansprüche 1 oder 2, wobei die Hauptaufhängungsstruktur ferner zwei Pleuelstangen (24) umfasst, die direkt zwischen dem Element (10) und dem Triebwerksgehäuse (C) beweglich angeordnet sind und in im wesentlichen symmetrischer Form in Bezug auf die Mittelebene (XOY) in zwei Richtungen, die zwischen der ersten Richtung (X') und der zweiten Richtung (Y') liegen, ausgerichtet sind.

6. Vorrichtung nach einem der Ansprüche 3 bis 5, wobei die Pleuelstangen (24,32) durch Drehachsen (26, 30, 36, 40) beweglich sind.

7. Vorrichtung nach einem der Ansprüche 1 bis 6, wobei das Triebwerk ein Luftstrahltriebwerk ist, wobei das Gehäuse ein Zentralgehäuse (C) desselben ist.

8. Vorrichtung nach einem der vorhergehenden Ansprüche, wobei das Element (10) eine Trennungsebene umfasst, die durch Befestigungsmittel (13) an dem Masten befestigt werden kann.
